# EUROPEAN PATENT SPECIFICATION

(11) **EP 1 207 121 B1**
(45) Date of publication and mention of the grant of the patent: **09.03.2005**
(21) Application number: 00915607.6
(22) Date of filing: 28.03.2000
(51) Int. Cl.: B65D 8/08, B67D 1/04, C12H 1/22

(54) **DEVICE FOR STORING AND POURING LIQUID PRODUCTS**
VORRICHTUNG ZUR LAGERUNG UND ZUM AUSGIESSEN VON FLÜSSIGKEITEN
DISPOSITIF PERMETTANT DE STOCKER ET DE DISTRIBUER DES PRODUITS LIQUIDES

(30) Priority: 06.04.1999 RU 99107220; 28.12.1999 RU 99126862
(43) Date of publication of application: 22.05.2002
(73) Proprietor: Sysoev, Vladimir Nikolaevich, St. Petersburg, 195279 (RU); Berlin, Mikhail Vladimirovich, 192289 St. Petersburg (RU)
(72) Inventor: Sysoev, Vladimir Nikolaevich, St. Petersburg, 195279 (RU)
(74) Representative: Prato, Roberto
(86) International application number: PCT/RU2000/000102
(87) International publication number: WO 2000/059805

(56) References cited:
- FR-A- 380 700
- FR-A- 800 869
- FR-A- 1 150 289
- FR-A- 1 227 430
- FR-A1- 2 557 544
- GB-A- 857 786
- RU-U1- 11 203
- "Encyclopaedia Britannica Vol 6" 1961 , HAZEL WATSON & VINEY LIMITED , ENGLAND XP002267016 * page 392, column 2, line 18 *

## Description

### Field of the Invention

The invention relates to the devices for storing and pouring the liquid products that are subject to deterioration when in contact with air, for example - wines, highly alcoholic beverages, beer, etc. The preferable field of applications of the invention - trade in wine, beer, etc. on tap in stores, restaurants, bars and so on, or the domestic use thereof.

### Prior Art

Such products as wine and beer are traditionally sold in bottles. But in many cases, especially in case of the new wine, it would be preferable and more original to store it in, and tap from small casks (having capacity to 200 litres).

When the wine is tapped from a vessel, an air space is formed over the wine surface, which is undesirable for the reason that such space may be a contributory factor for oxidation of the wine and development of pathogenic microorganisms, and during transportation of the wine in a vessel it is agitated, which results in degradation of its quality. A prolonged rest is then required for restoration of properties of a wine. Various devices for storing and pouring the wine are known to eliminate these drawbacks, which devices exclude the contact between air and wine.

Known is a tank for storing the wine products /1/, wherein the wine is stored under a layer of a sealant (sulphuric anhydride) that prevents the content from contacting with air.

Known is a device /2/ for automatic replenishing and drawing off the wine products and similar products when they are stored in tanks, also comprising a sealant for protecting a wine product against contact with air.

Said known devices are used in the industrial environment for storing the wine, and they are rather sophisticated and not suitable for the wide use in restaurants, bars, etc., or for the domestic use. Further, the modern sanitary requirements and strict standards regarding the impurity content do not allow to utilise the sulphuric compositions in contact with wine.

Known is a device for storing the wine /3/ that is an enamelled tank, wherein the wine is stored under the anoxic conditions beneath a layer of an inert gas (nitrogen).

Known is a device for storing and pouring wines, fruit juices and so on /4/, being a sealed vessel in the form of a cask having a drain cock and a vertically arranged opening on the side surface, wherein - with a plug - inside the vessel attached is an expansible element that is bellows-folded, and adapted to expand until it reaches the vessel volume under action of ambient air.

In this known device, as follows from the accompanying drawing, the vessel is made of a metal, and for this reason the benefit from the known advantages for storing wine or cognac in oak casks, where they would be preserved better and acquire an improved flavour, is not derived.

Another drawback is the possibility that air would penetrate through a tap when the wine is tapped.

Furthermore, the expanding bellows-folded element requires a considerable size of an opening wherein said element is fitted in the cask.

The british Patent GB 857 786, adopted as the most pertinent prior art of this invention discloses a device having all the features of the preamble of claim 1.

### Disclosure of the Invention

The object of this invention is to provide a device for storing and pouring the wine in small quantities for mass consumption, wherein the contact between wine and air is eliminated, the wine flavour being maintained to maximum extent.

The object is achieved by a device for storing and pouring the liquid products, wherein said device is a cask made of oak staves, a bottom of which cask is provided with a drain cock having a check valve; a central portion (bilge) of the cask side is provided with an opening, through which opening, inside the cask, an expansible element made of the food-grade polyethylene is attached and adapted to expand until it reaches the cask volume under action of ambient air or an external gas source; a width of the cask stave, where the opening is formed, is at least 1.2D, where D is the opening diameter; and the expansible element is in the form of a cylindrical packet previously rolled-up as a roll and having a length that corresponds to a distance between the cask bottoms and having a volume that is greater than a cask inner volume by 10-15%.

A reserve of the packet volume is necessary to ensure the expansion of the packet so that it will reach the cask volume, which regard to the possibility of appearance of creases in said packet.

Thickness of the food-grade polyethylene is at least 80 micron, which value will ensure the absence of diffusion of air through the polyethylene layer.

### Brief Description of Drawings

The claimed invention is illustrated in Figs. 1-4, wherein:
Fig. 1 shows tap 1, glass valve 2, silicone seat 3, plug 4, temporary stopper 5, drain cock assembly 6, oak cask 7.
Fig. 2 shows temporary stopper 1, plug 2, insert 3, sealed packet 4, compressed air feed nozzle 5.
Fig. 3 shows the pattern of folding of a polyethylene sealed packet before it is placed into a cask.
Fig. 4 shows a general view of a cask in section.
Fig. 5 shows a general view of a cask provided with a device for displacing a liquid product by compressed air.

### Best Embodiment of the Invention

For making the casks intended for storage of wine or cognac, the oak staves are traditionally used - the side staves for the constituting cask (side surface of the cask) and the heading for bottoms, which are fastened by metal hoops. For the small-volume casks (5 to 25 dm³), width of the side staves (on the outer circumference in the bilge) is 40-75 mm. Cask stave sizes are the standard ones and must fulfil certain requirements (see Table 1).

**Table 1.**

| Cask Stave Sizes (Side Stave) | | | |
|---|---|---|---|
| Rated capacity of casks, dm³ | Length | Width | Thickness |
| 5 | 255 | 40-66 | 12 |
| 8 | 256 | 40-70 | 12 |
| 15 | 355 | 40-75 | 15 |
| 25 | 426 | 40-75 | 15 |
| 50 | 566 | 40-100 | 18 |
| 100 | 657 | 40-100 | 18 |
| 150 | 760 | 40-110 | 19 |
| 200 | 815 | 40-110 | 22 |

Size of diameter of the opening that accommodates a plug, wherewith an expansible element is attached, is selected to ensure the possibility of passage therethrough of a rolled-up as a tube and folded-in-two expansible expendable element, and is at least 40-50 mm, which value may exceed the possible size of the side stave width for the small-capacity casks. Thus, for these casks one of the side staves, wherein an opening is made, has the width that is greater than the opening diameter at least by 20%.

Casks are prepared as follows.

New casks first are filled with cool water, left for 3-4 days, then the water is discharged. This procedure is repeated for 2-3 weeks. Then the casks are treated by alkali: 0.2-0.3% solution of NaOH or KOH in cool water, left for 5-6 days with said solution therein, with subsequent rinsing by hot and cool water. Amount of the filled-in alkali is 8-10% of the cask volume.

Immediately before a cask is filled with wine, it is subjected to steaming by live steam at temperature of 100°C for 30 minutes. Then the casks are filled with hot water at temperature of 70-80°C and rinsed during 30 minutes.

The heavily-polluted casks, after they have been rinsed by hot water, are further treated by 1-2% solution of sulphuric acid in hot water during 15-20 minutes; the solution volume must constitute 5-6% of the cask volume; then the casks are further treated by 0.2-0.3% solution of NaOH or KOH in cool water during 2 hours. Volume of the filled-in alkali must constitute 8-10% of the cask volume.

After that the casks are rinsed by cool water until the water discharged therefrom becomes colourless and exhibits the neutral reaction towards litmus. Cleanliness of casks is tested by the laboratory tests.

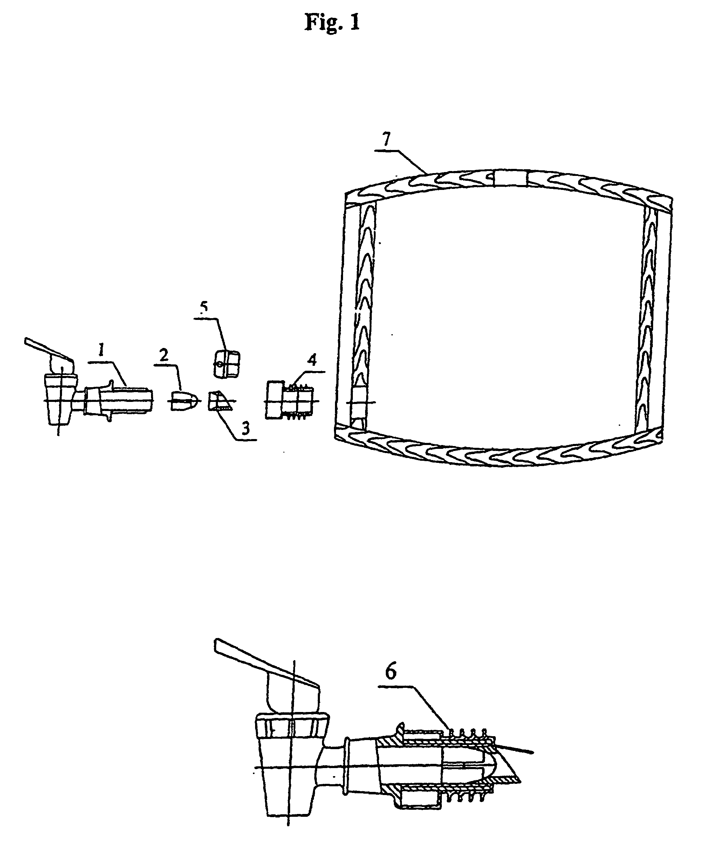

After all above-cited procedures, the casks are provided with a drain cock (Fig. 1) and a sealed packet.

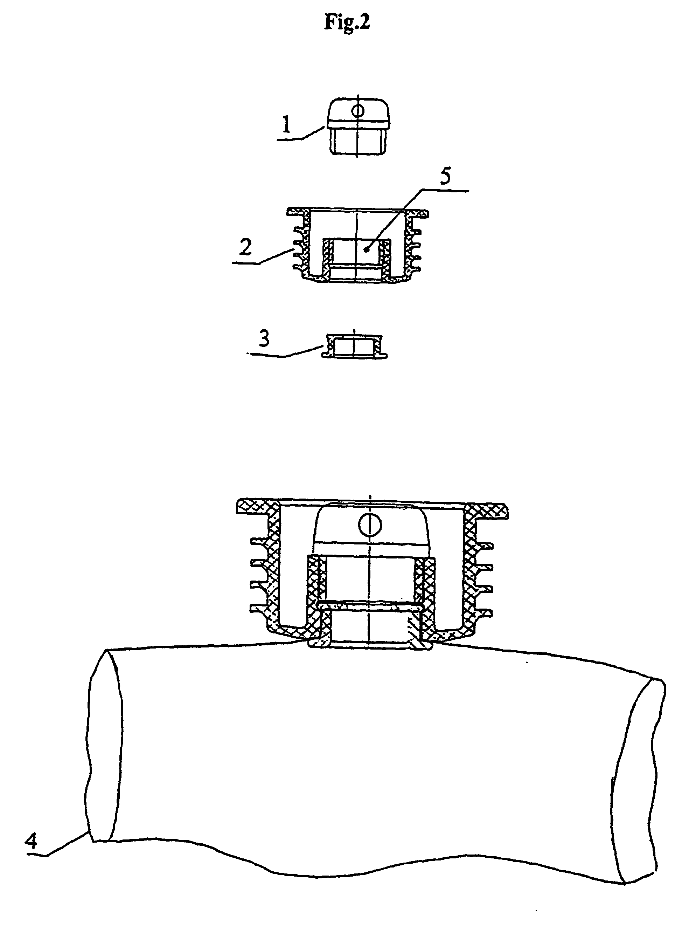

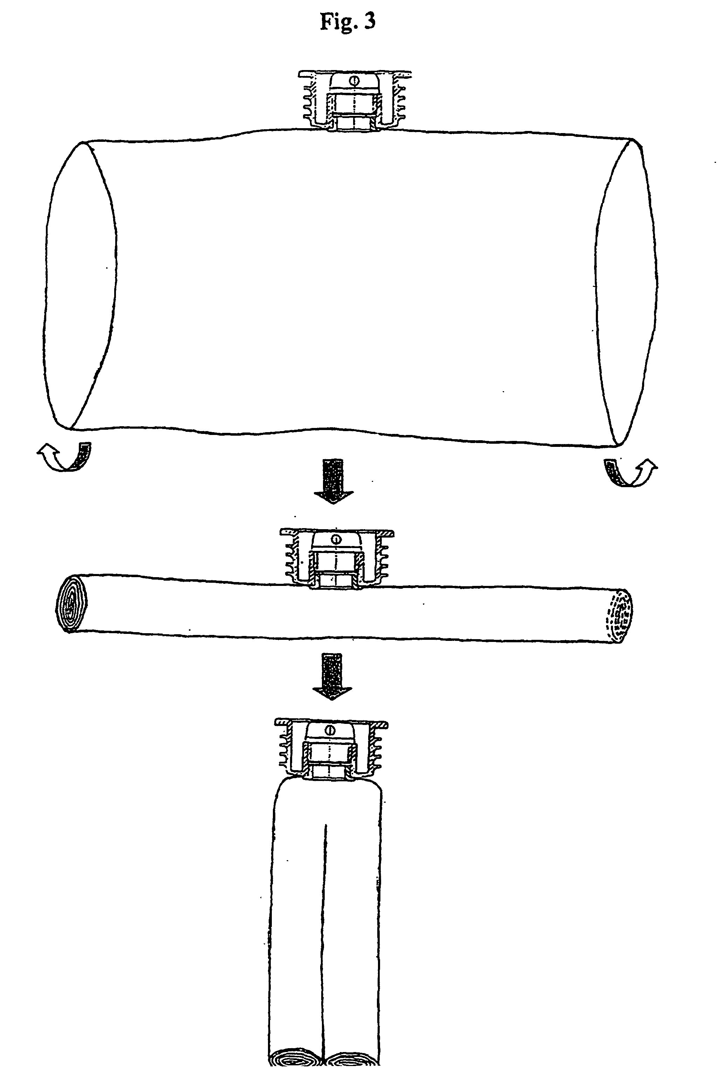

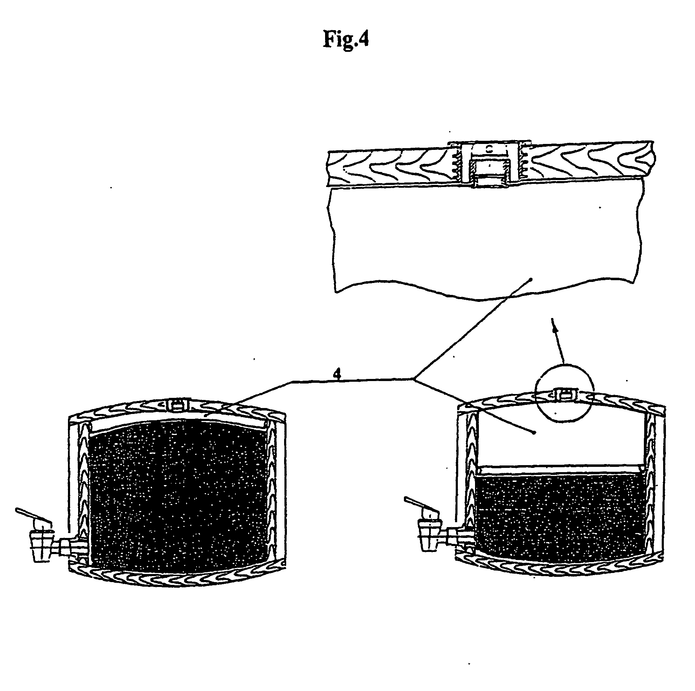

Into the packet neck made as a cylindrical sleeve (Fig. 2) placed is insert 3, whereto plug 2 is inserted, such that the packet neck becomes tightly held between the insert and plug to ensure the sealed connection. After that, the packet is rolled up into a roll along generatrix (Fig. 3), displacing the air thereout. The plug is closed by temporary stopper 1 (Fig. 2), the rolled-up packet is bent in two and inserted into the cask (Fig. 4). Inside the cask, the roll unfolds with respect to the bend and disposed over the cask inner surface.

Casks are the containers of repeated use and undergo the above-discussed preparation for every new filling, and the expansible element and parts for attaching said element are expendable.

A cask is filled with a liquid in the upright position through the drain cock; and for the purpose to release the air out of the cask until the same is filled completely, the cock is screwed loosely.

When a liquid is tapped from a cask, the rolled-up packet unfolds, thus occupying the volume that becomes available.

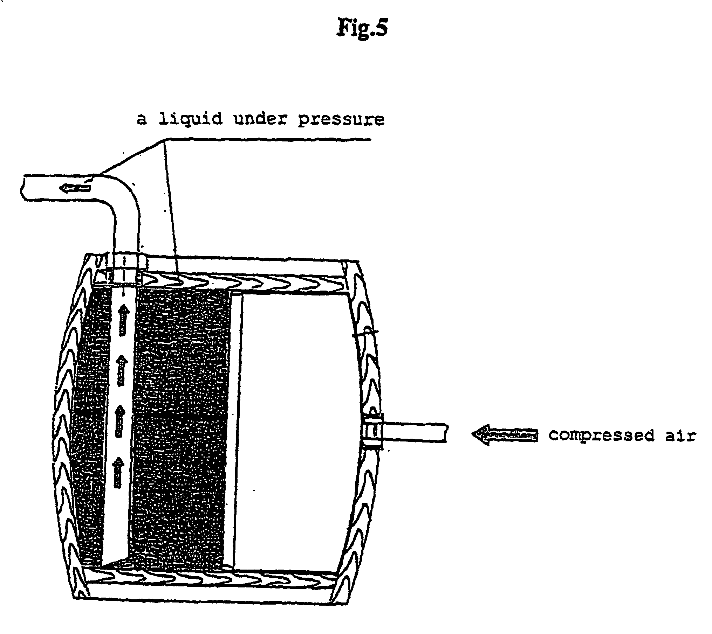

In case of tapping when a cask is lower than the pouring level (e.g. under the bar counter, store counter, etc.), a cask is positioned upright (Fig. 5), a compressed air is supplied into the packet via a pipe connection, and a tube is fitted into a cask to draw off the liquid on the cask bottom.

### Industrial Applicability

The claimed device can be manufactured in industries using the conventional cooperage techniques and modern techniques for making the accessories (drain cock, expansible element and parts for attaching the same) of polymer materials.

### References

1. Inventor's certificate USSR N 391171, IPV C 12 H 1/22, 1973
2. Inventor's certificate USSR N 346337, IPC C 12 H 1/22, 1972
3. Inventor's certificate USSR N 657061, IPC C 12 H 1/22, 1979
4. French Patent N 2482053, B 65 D 81/24, 1981

## Claims

1. A device for storing and pouring liquid products, wherein said device is a vessel in the form of a cask, (7) at a bottom of which cask provided is a drain cock (6), a central portion of a side part of said cask is provided with an opening through which opening, inside said cask, an expansible element (4) adapted to expand until it reaches the cask volume under action of ambient air or an external gas source is attached, whereby the cask is made of oak staves; **characterised in that** a width of the cask stave, wherein the opening is formed, is at least 1.2D, where D is a diameter of said opening; said expansible element is in the form of a cylindrical packet preliminarily rolled up as a roll and having a length that corresponds to a distance between cask bottoms, said cylindrical packet having a volume that is greater than a cask inner volume by 10-15%.

2. The device for storing and pouring liquid products as claimed in claim 1, **characterised in that** said drain cock is provided with a check valve.

3. The device for storing and pouring liquid products as claimed in any of claims 1, 2, **characterised in that** the expansible element is made of the food-grade polyethylene at least 80 mcm thick.

## Patentansprüche

1. Vorrichtung zur Lagerung und zum Ausgießen von Flüssigkeiten, wobei die Vorrichtung ein Gefäß in Form eines Fasses (7) ist, wobei:
am Boden dieses Fasses ein Auslasshahn (6) vorgesehen ist,
ein Mittelabschnitt eines Seitenteils des Fasses mit einer Öffnung versehen ist, durch diese Öffnung im vorgenannten Faß ein expandierbares Element (4) befestigt ist, das dazu eingerichtet ist, so lange zu expandieren, bis es das Fassvolumen durch Einwirkung von Umgebungsluft oder einer daran befestigten externen Gasquelle erreicht, und das Faß aus Eichenkufen hergestellt ist;
**dadurch gekennzeichnet, dass**
eine Breite der Eichenkufen, in denen die Öffnung gebildet ist, mindestens 1,2D beträgt, wobei D der Durchmesser der Öffnung ist; das expandierbare Element in Form eines zylindrischen Pakets vorliegt, das vorläufig als Rolle aufgerollt ist und eine Länge besitzt, die einem Abstand zwischen den Faßböden entspricht, wobei das zylindrische Paket ein Volumen aufweist, das 10 bis 15% größer als ein Faßinnenvolumen ist.

2. Vorrichtung zum Lagern und zum Ausgießen von Flüssigkeiten, wie in Anspruch 1 beansprucht, **dadurch gekennzeichnet, dass** der Auslasshahn mit einem Rückschlagventil versehen ist.

3. Vorrichtung zum Lagern und zum Ausgießen von Flüssigkeiten, wie in irgendeinem der Ansprüche 1, 2 beansprucht, **dadurch gekennzeichnet, dass** das expandierbare Element aus einem mindestens 80mcm dicken nahrungsmitteltauglichen Polyethylen hergestellt ist.

## Revendications

1. Dispositif destiné à stocker et à distribuer des produits liquides, dans lequel ledit dispositif est un récipient sous la forme d'un fût (7) au fond duquel est disposé un robinet (6) de purge, une partie centrale d'une partie latérale dudit fût est pourvue d'une ouverture à travers laquelle, à l'intérieur dudit fût, un élément (4) dilatable adapté afin de se dilater jusqu'à ce qu'il atteigne le volume du fût sous l'action de l'air ambiant ou d'une source de gaz externe est fixé, moyennant quoi le fût est composé de douves en bois de chêne ; **caractérisé en ce qu'**une largeur de la douve du fût, dans lequel l'ouverture est réalisée, est d'au moins 1, 2D, où D représente un diamètre de ladite ouverture ; ledit élément dilatable se présente sous la forme d'un paquet cylindrique préalablement enroulé tel un rouleau et ayant une longueur qui correspond à une distance entre les fonds de fût, ledit paquet cylindrique ayant un volume supérieur à un volume interne du fût de 10 à 15 %.

2. Dispositif destiné à stocker et à distribuer des produits liquides selon la revendication 1, **caractérisé en ce que** ledit robinet de purge est pourvu d'un clapet de non-retour.

3. Dispositif destiné à stocker et à distribuer des produits liquides selon l'une quelconque des revendications 1, 2, **caractérisé en ce que** l'élément dilatable est composé de polyéthylène alimentaire d'au moins 80 mm d'épaisseur.
